# EUROPEAN PATENT APPLICATION

(11) **EP 0 816 909 A2**
(43) Date of publication of application: **07.01.1998**
(21) Application number: 97201775.0
(22) Date of filing: 12.06.1997
(51) Int. Cl.: G03B 1/02

(54) **Film rewind and camera**

(30) Priority: 24.06.1996 US 669021
(71) Applicant: EASTMAN KODAK COMPANY, Rochester, New York 14650-2201 (US)
(72) Inventor: Petruchik, Dwight J., Rochester, New York 14650-2201 (US); McGinn, Donald P., Rochester, New York 14650-2201 (US)
(74) Representative: Lewandowsky, Klaus, Dipl.-Ing.

(57) **Abstract**

A film rewind and camera. The film rewind has a body and a handle. The body has a pair of opposed jaws which resiliently retain the handle in pivotable relation to the body. At least one of the jaws has an endwall. The handle is pivotable relative to the body about a pivot axis adjacent the endwall, between a stored position, in which the handle is disposed between the jaws and a use position, in which the handle is partially displaced from the jaws. The handle, in the use position bears against the endwall.

## Description

### Field of the Invention

The invention relates to photography and photographic apparatus ad more particularly relates to a film rewind and camera.

### Background of the Invention

In many cameras as pictures are taken, photographic film is withdrawn from a film cartridge. After the entire roll of film has been exposed, the film is rewound back into the cartridge, which is then removed for processing. Film rewinds have taken a variety of forms, many both complex and expensive. In an effort to reduce cost and with an improvement m the quality of readily available polymers, camera manufacturers have manufactured cameras having film rewinds in the form of polymeric castings. These castings have one end that is adapted to engage the catridge and the other end has a cap that protrudes from the camera body. Many of these film rewinds have a handle that includes a peg or grip. The handle is movable from a first position within a slot in the cap and a second postion in the handle extends outward to give the user additional leverage in rotating the rewind. In the preparation of these film rewinds it has been desirable to reduce the number of parts and to utilize configurations that can be readily molded.

These constraints have led to film rewinds having a number of shortcomings. For example, some film rewinds have two parts: a body with a cap having a slot running fully across it and a handle disposed in the slot. The handle pivots in pockets in the radial surface of the cap at one end of the slot. The film rewind is easy to assemble, but the handle must be held in place by a secondary structure, such as a ring extending out from a camera body. When the film is rewound, the handle bears on the secondary structure. In some other film rewinds, the slot again extends fully across the cap, but the handle pivots in pockets let into the bottom of the cap adjoining the slot. The body is slightly resilient allowing the handle to be popped upward into place. The handle is then held in place by a tab. These film rewinds have the shortcoming that a downward force applied to the handle during rewinding tends to pop the handle back out of the body. The rewinds can be designed so as to increase the force necessary to accidentally disassemble the handle, but this tends to increase the force necessary to assemble the handle. These problems are solved in some other film rewinds, by making the slot in the top of the cap blind at one end and adding a third piece. The handle is slid, from the open end of the slot, into grooves underlying the top of the cap. The third piece is wedged into the slot and blocks discharge of the handle from the slot. The shortcoming here is more pieces and more complex assembly.

It would thus be desirable to provide an improved film rewind and camera in which the film rewind has two pieces that assemble easily and resist disassembly during use without the use of additional pieces or structures.

### Summary of the Invention

The invention is defined by the claims. The invention, in its broader aspects, provides a film rewind and camera. The film rewind has a body and a handle. The body has a pair of opposed jaws which resiliently retain the handle in pivotable relation to the body. At least one of the jaws has an endwall. The handle is pivotable relative to the body about a pivot axis adjacent the endwall, between a stored position, in which the handle is disposed between the jaws and a use position, in which the handle is partially displaced from the jaws. The handle, in the use position bears against the endwall.

It is an advantageous effect of at least some of the embodiments of the invention that an improved film rewind and camera are provided in which the film rewind has two pieces that assemble easily and resist disassembly during use without the use of additional pieces or structures.

### Brief Description of the Figures

The above-mentioned and other features and objects of this invention and the manner of attaining them will become more apparent and the invention itself will be better understood by reference to the following description of an embodiment of the invention taken in conjunction with the accompanying figures wherein:
Figure 1 is a top perspective view of an improved film rewind showing the handle assembled on the body.
Figure 2 is a top perspective view of the film rewind of Figure 1 before assembly of the handle and body.
Figure 3 is a bottom perspective view of the film rewind of Figure 1 showing the handle assembled on the body.
Figure 4 is a bottom perspective view of the film rewind of Figure 1 before assembly of the handle and body.
Figure 5 is a top plan view of the film rewind of Figure 1 showing the handle in a position immediately adjacent the handle receiver and the direction of the force that can be applied to assemble the handle and body.
Figure 6 is a top plan view of the firm rewind of Figure 1 showing the handle assembled in the body. The handle is in the use position.
Figure 7 is a top plan view of the firm rewind of Figure 1 showing the handle assembled in the body. The handle is in the stored position.
Figure 8 is a semi-diagrammatical cross-sectional view of an embodiment of the camera of the invention which includes the film rewind of Figure 1.
Figure 9 is simplified partial side plan view of another embodiment of the improved film rewind. The position of the inner end of the handle is indicated by dashed lines.
Figure 10 is a simplified partial cross-section taken substantially through the centers of the handle pins and the tabs.

### Description of Particular Embodiments

The film rewind 10 has a body 12 and a handle 14. The body 12 has an attachment portion 16 and a cap 18. The attachment portion 16 defines a main axis 20 that extends through the attachment portion 16 and cap 18. The camera 22 of the invention includes the film rewind 10 disposed in an opening or receptacle 23. The attachment portion 16 of the film rewind 10 is disposed so as to engage a film canister or film roll 25 for rewinding. The main axis 20 is the axis of rotation of the film rewind 10 during rewinding. The term "rewinding" as used herein, is inclusive of both the rewinding of the film back into a canister or roll after exposure and a preliminary winding of unexposed film which is then returned to a canister or roll one exposure at a time during use.

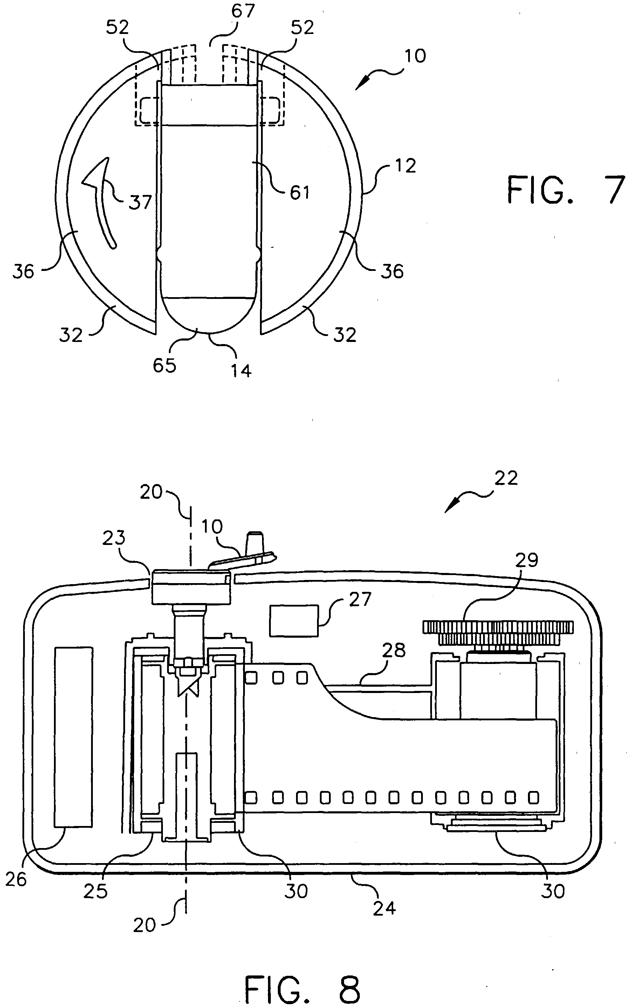

The film rewind 10 does not significantly limit other features of the camera 22. For example, the camera can be intended for single or multiple use. If single use, the camera can be destroyed by opening for film processing or can be recloseable after film removal. Components, such as the battery 26, viewfinder 27, film frame 28, film advance 29, and film chambers 30 shown in Figure 8, can be arranged in a wide variety of ways. The film rewind 10 is also not limited to particular film types; however, the attachment portion 16 should be configured to meet the well-known requirements of a particular film type and as would be expected, use of a film rewind 10 having an attachment portion 16 configured for one film type with another film type is likely to be problematic.

The film rewind 10 has only two pieces. Those two pieces, the body 12 and the handle 14, are each a unitary polymeric casting. It is highly preferred that the body 12 and the handle 14 each comprise substantially the same thermoplastic polymer, that is, that the body 12 and the handle 14 together define a common feedstock for polymer reprocessing. This permits recycling of the film rewind 10 without removal of the handle 14 from the body 12. It is also preferred that, to the extent practical, the major structural member or members 24 of the camera and the film rewind 10 likewise comprise substantially the same thermoplastic polymer to allow common recycling of a number of camera components. A specific example of a suitable polymer is polycarbonate.

The attachment portion 16 of the handle 14 is adapted to engage an internal reel or other part of a film canister or to engage part of the film, depending upon the configuration of the canister and/or film with which the film rewind 10 is intended to be used. Suitable such configurations for the attachment portion 16 are well known to those of skill in the art. The upper end of the attachment portion 16 is joined to the cap 18.

The cap 18 extends outward from the attachment portion 16, both radially and axially, relative to the main axis 20. The cap 18 has a pair of opposed jaws 32. The jaws 32 each have a periphery 34 that is shaped to meet the requirements of the mating receptacle 23 of the camera 22. For example, the jaws 32 can have a circular periphery 34 for use within a circular receptacle 23. The cap 18 can also be modified to meet the requirements of other secondary purposes, as long as those modifications do not substantially degrade the usefulness of the film rewind 10. For example, in the embodiment shown in the figures, the periphery 34 of each jaw 32 includes an inset 35 to reduce weight and the upper surface 36 of one of the jaws 32 includes a molded-in arrow 37 to indicate the rewind direction.

The jaws 32 each have an inner face 38. The inner faces 38 define the longitudinal boundaries of a channel or slot 40 that extends substantially perpendicular to the main axis 20. The jaws 32 can have complex shapes or can both be flat and parallel to each other and the main axis 20. One or both of the jaws 32 have an endwall 42. A pair of endwalls 42 is preferred, since a single endwall 42 can be weaker and more difficult to fabricate. (Further discussion herein, as a matter of convenience, solely refers to a pair of endwalls 42.) The endwalls 42 have the form of an extension of the periphery 34 of the jaws 32. The endwalls 42 at least partially occlude one end of the channel 40. In the film rewind shown in the figures, the endwalls 42 are mirror-images of each other. The gap between the jaws 32 at the endwalls 42 is smaller than the separation of the inner faces 38 across the channel 40.

The jaws 32 can be joined together by a base 44 underlying part or all of the channel 40 or can both be joined directly to the attachment portion 16. The jaws 32 have a handle receiver 46 that is adjacent to the endwalls 42.

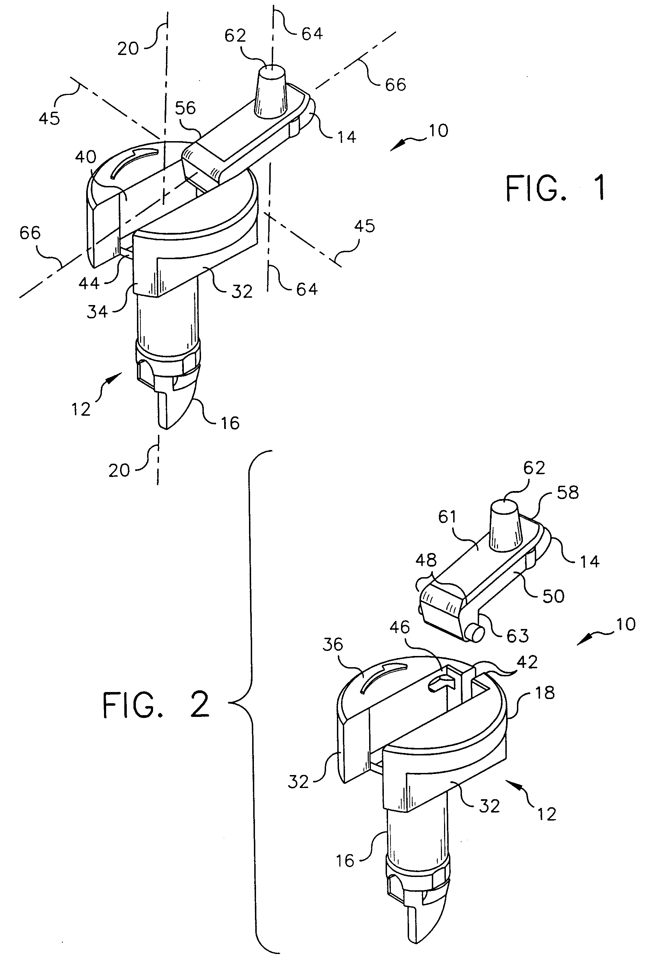

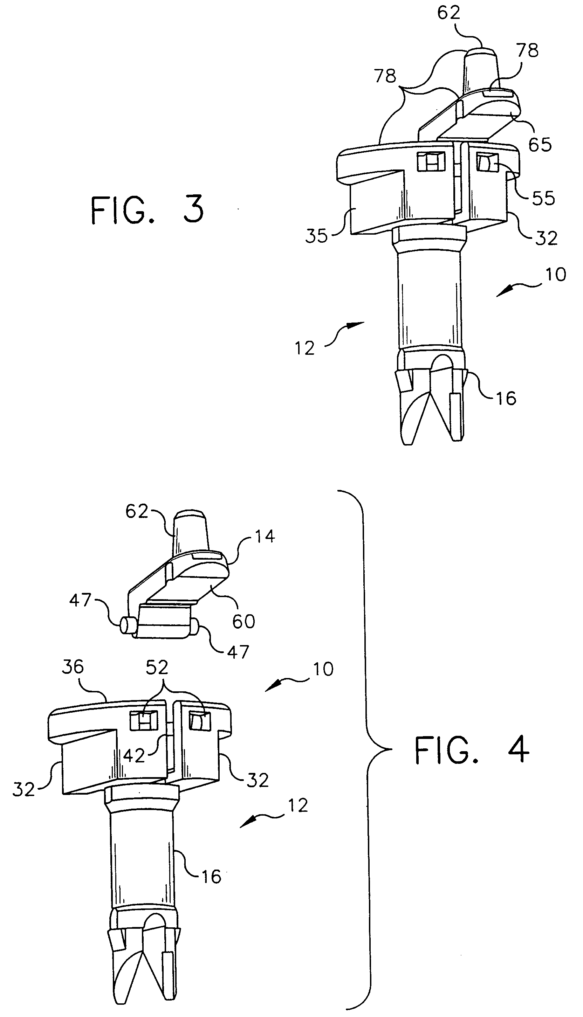

The handle 14 has a retention member 48 that fits in the handle receiver 46. The handle 14 is pivotable about a pivot axis 45, within the handle receiver 46, relative to the body 12, between a stored position (shown in Figure 7) in which the handle 14 extends along the channel 40 and a use position (shown in Figures 1, 3, and 6) in which the handle 14 abuts the endwalls 42 and extends outward from the jaws 32. It is preferred that, in the stored position, substantially all of the handle 14 be disposed between the jaws 32. The handle receiver 46 and retention member 48 are configured to hold the handle 14 in place in the handle receiver 46, but permit easy rotation between the stored and use positions.

In the film rewinds shown in the figures, the retention member 48 is a pair of opposed pins 47 that extend laterally outward from a main portion 50 of the handle 14. The handle receiver 46 is a pair of opposed sockets 52 in the inner faces 38 of the jaws 32. In the embodiment of the invention shown in Figures 1-8 the sockets 52 each have a first zone 53, forward of the end walls 42, which holds the respective pin 47 of the handle 14, and a second zone 54, which is exterior to the first zone 53. The second zones 54 communicate with the exterior through respective second openings 55 that extend through the periphery 34 of the respective jaw 32. This configuration has the advantage of providing relatively large structures in the mold used to fabricate the body 12, that correspond to the sockets 52.

The main portion 50 of the handle has an attachment end 56 and a free end 58 and opposed first and second surfaces 60,61. The retention member 48 is located at the attachment end 56. A grip or peg 62 extends outward from the free end 58 of the handle 14. In the embodiment of the invention shown in Figures 1-8, the first surface 60 of the main portion, at the attachment end 56, is joined to an outwardly extending tail 63 that includes the pins 47 of the retention member 48. The grip 62 extends outward from the second surface 61 of the main portion 50, at the free end 58. The grip 62 is cylindrical or slightly conical and has a central grip axis 64.

The handle 14 can vary in configuration; however, it is preferred that the handle 14 and cap 18 be configured to provide the following characteristics. The handle 14, in the stored position, should extend not at all or only slightly beyond the upper surface 36 of the jaws 32. This reduces unintended snagging of the handle 14 on objects in its vicinity. The handle receiver 46 and retention member 48 should be positioned so as to withstand impacts expected in ordinary use. Endwalls 42 substantially coplanar with the surface of the jaws 32 can help achieve this purpose. The endwalls 42 should also be sufficiently rigid to not bend perceptibly during film rewinding.

Another, very preferred characteristic is that the grip axis 64 be parallel or substantially parallel to the main axis 20 when the handle 14 is in the use position. This allows the user's hand to remain in the same plane during rotation of the film rewind 10. (During rewinding, rotation of the film rewind 10 is about the main axis 20.) The grip 62 is held loosely between two of the user's fingers and is moved in a circular motion. The grip 62 is fixed relative to the rest of the handle 14 and thus must rotate with the handle 14 during this motion; however, because the rotation of the handle 14 is in a plane substantially perpendicular to the grip axis 64 and main axis 20, the grip 62 is easy to hold without excessive pressure or finger repositioning.

In the film rewind 10 shown in the figures, the tail 63 of the handle 14 is relatively short and the main portion 50 of the handle defines a longitudinal handle axis 66 that is oblique to both the main axis 20 and the grip axis 64 (when the handle 14 is in the use position). The tail is roughly perpendicular to the handle axis 66. In the stored position, with this embodiment, the handle axis 66 is again oblique to the main axis 20 (not shown). The attachment end of the handle 14 is recessed below the cap 18 surface. This aspect is very visible to the user and helps the user quickly acertain which portion of the handle 14 to access to pivot the handle 14 from the stored position to the use position.

The length of the handle 14 can be selected such that only a small portion of the second surface 61 of the handle extends outward from the surface 36 of the jaws 32 when the handle 14 is in the stored position. In the embodiment shown in Figures 1-8, the terminus 65 of the second surface 61 is relieved and the entire second surface 61 is disposed at or below the level of the upper surface 36 of the jaws 32 when the handle 14 is in the stored position. This reduces the risk of impact damage to the handle 14 and provides an aesthetically pleasing apperance.

The jaws 32 resiliently retain the handle 14 within the handle receiver 46. In the film rewind 10 shown in Figures 1-8, the inner faces 38 of the jaws 32 are resiliently movable toward and away from each other, primarily by means of a deflection of the base 44, and to a limited extent, the parts of the jaws 32 adjoining the base 44. The thickness (smallest dimension) of the base 44 is smaller than the thicknesses (smallest dimension) of the remainder of the jaws 32 and the deflection is primarily limited to the base 44. The base 44 has gaps at one or both ends adjoining the periphery 34. At each end, the base 44 continues to the periphery 34 except for a slot or gap 67 that is narrower than the channel 40, or the base 44 is separated from the periphery 34 by a gap that extends the full width of the channel 44. The degree of deflection of the jaws 32 can be varied to meet particular requirements, such as a change in the stiffness of the polymer used for the film rewind body, by changing base thickness and changing the dimensions of the gaps 67. Precise dimensions can be readily determined by trial and error. The base 44 can be eliminated and resiliency can be provided by the parts of the jaws 32 adjoining the attachment portion 16; however, resiliency is then more difficult to adjust.

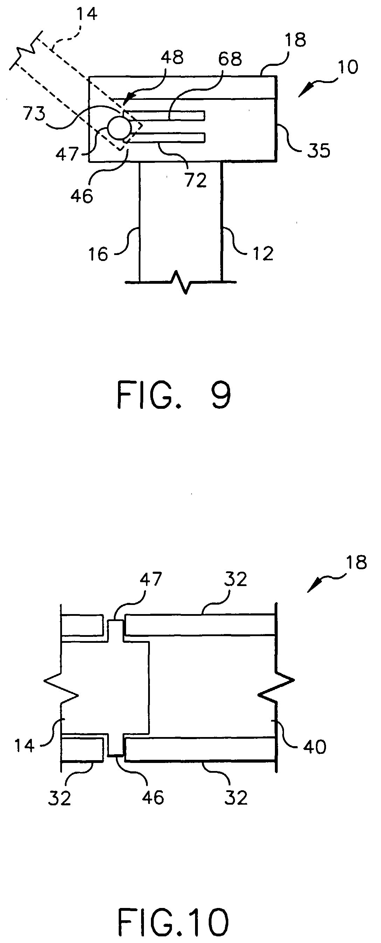

Referring now to Figures 9-10, jaw resiliency can instead be provided by one or more tabs 68 that are separated from the remainder of the inner faces 38 of the jaws 32 by roughly U-shaped cut-outs 70. Resiliency here is primarily a function of tab shape and polymer stiffness. In the film rewind 10 shown in Figures 9-10, a pair of tabs 68 are used and the legs 72 of the cut-outs 70 extend parallel to the channel and are several times as long as the cut-out bases 73 which extend perpendicular to the legs 72. The cut-outs 70 have the shortcoming of adding additional complexity to the shape of the cap 18 and the mold used to make the cap 18. The endwalls 42 are shorter than the rest of the jaws 32 in this film rewind 10.

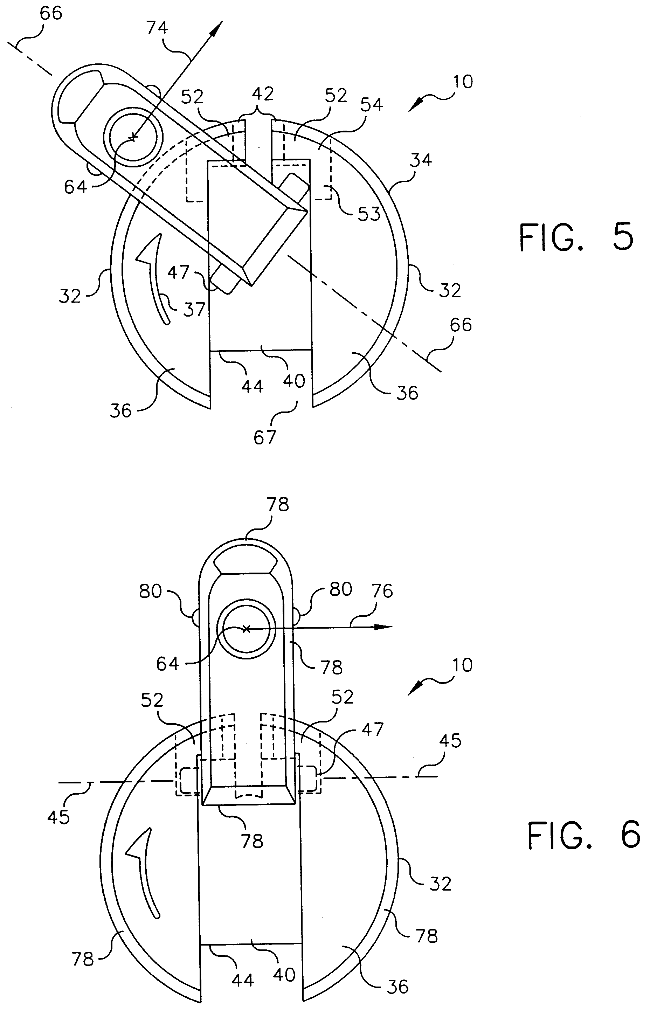

The resiliency of the film rewind 10 can be varied over a wide range; however, it is preferred that the resiliency provide both a low risk of inadvertent disassembly of the handle 14 and rewind body 12 during use and easy assemby during fabrication. In a preferred resiliency range, the handle 14 can be assembled in the jaws 32 (that is, deflected into the handle receiver 46 from a position immediately adjacent the handle receiver 46) by a force (indicated by arrow 74 in Figure 5) of from about 2 ounces-force (about 0.5 newtons) to about 20 pounds-force (about 90 newtons) applied to the grip 62 in a direction substantially perpendicular to both the handle axis 66 and the grip axis 64 (indicated in Figure 5 by the symbol "x"). This "assembly force" is substantially the same as or greater than a similarly oriented "disassembly force" (indicated by arrow 76 in Figure 6) necessary to unseat the handle 14 from the handle receiver 46. This range of assembly force provides easy assembly and a low risk of inadvertent disassembly. It has been determined that a greater resiliency than provided in this range makes it more difficult during fabrication to ascertain when the handle 14 is seated in the handle receiver 46. An assembly force of about 30 ounces-force (about 8.5 newtons) has been determined to provide a combination of easy assembly, good resistance to disassembly, and very easily ascertained seating of the handle 14 in the handle receiver 46.

The film rewind 10 is resistant to disassembly or deformation in directions in which forces are likely to be applied during rewind, that is, forces having a large vector component directed parallel to the main axis 20 and toward the handle 14 or cap 18. Such forces when applied to the handle 14, urge the handle 14 against the endwalls 42. In preferred embodiments of the invention, the endwalls 42 and other portions of the jaws 32 and handle 14 are highly resistant to deformation (distortion or disassembly of the parts) by such forces. The jaws 32 are capable of retaining the handle 14 within the handle receiver 46, substantially free of deformation, against a force of at least about 10 pounds-force (about 45 newtons) or preferably at least 30 pounds-force (about 135 newtons) applied to the grip 62 in a direction along the grip axis 64 and toward the handle axis 66.

The film rewind 10 can be further configured to meet a variety of considerations. For example, margins 78 of the body 12 and handle 14 can be chamfered or filleted or otherwise relieved to eliminate sharp edges, reduce weight, provide easier fabrication, render the handle 14 and cap 18 easier for the user to manipulate, or for esthetic reasons. Opposed tangs 80 can be provided on the handle 14 to engage the inner faces 38 of the jaws 32 when the handle 14 is in the stored position.

While specific embodiments of the invention have been shown and described herein for purposes of illustration, the protection afforded by any patent which may issue upon this application is not strictly limited to a disclosed embodiment; but rather extends to all modifications and arrangements which fall fairly within the scope of the claims which are appended hereto:

### Parts list

film rewind 10
body 12
handle 14
attachment portion 16
cap 18
main axis 20
camera 22
opening 23
structural member 24
film canister or film roll 25
battery 26
viewfinder 27
film frame 28
film advance 29
film chambers 30
jaws 32
periphery 34
inset 35
upper surface of jaws 36
molded-in arrow 37
inner face 38
channel or slot 40
endwalls 42
base 44
handle receiver 46
pins 47
retention member 48
main portion 50
sockets 52
first zone 53
second zone 54
second openings 55
attachment end 56
free end 58
first and second surfaces 60,61
grip or peg 62
tail 63
grip axis 64
terminus 65
handle axis 66
gaps 67
tabs 68
cut-outs 70
legs 72
cut-out bases 73
arrow 74
arrow 76
margins 78
tangs 80

## Claims

1. A film rewind (10) comprising: a body (12) and a handle (14), is characterized in that: said body (12) has a pair of opposed jaws (32) resiliently retaining said handle (14) in pivotable relation to said body (12), at least one of said jaws (32) has an endwall (42), said handle (14) is pivotable relative to said body (12) about a pivot axis (45) adjacent said endwall (42), between a stored position wherein said handle (14) is disposed between said jaws (32) and a use position wherein said handle (14) is partially displaced from said jaws (32), said handle (14) in said use position bears against said endwall (42).

2. The film rewind of claim 1 further characterized in that said handle (14) has a grip (62), said grip (62) defining a grip axis (64) disposed in substantially parallel relation to said main axis (20) when said handle (14) is in said use position.

3. The film rewind of claim 1 or 2 further characterized in that said body (12) and said handle (14) are each a unitary polymeric casting.

4. The film rewind of claim 1, 2, or 3 further characterized in that said body (12) and said handle (14) each comprise substantially the same thermoplastic polymer.

5. The film rewind of claim 2, 3, or 4 further characterized in that said handle (14) defines a handle axis (66) and said jaws (32) are capable of retaining said handle (14) in said body (12) against a force of at least about 2 ounces-force (about 0.5 newtons) to about 20 pounds-force (about 90 newtons) applied to said grip (62) in a direction substantially perpendicular to a plane defined by said handle axis (66) and said grip axis (64).

6. The film rewind of claim 2, 3, 4, or 5 further characterized in that said handle (14) is subject to assembly with said body (12) from a position immediately adjacent said jaws (32) by a force of about 30 ounces-force (about 8.5 newtons) applied to said grip (62) in a direction substantially perpendicular to a plane defined by said handle axis (66) and said grip axis (64).

7. The film rewind of claim 2, 3, 4, 5, or 6 further characterized in that said jaws (32) are capable of retaining said handle (14) against a force of at least about 10 pounds-force (about 45 newtons) applied to said grip (62) in a direction substantially along said grip axis (64) and toward said handle axis (66).

8. The film rewind of claim 7 wherein said force applied to said grip (62) in a direction substantially along said grip axis (64) and toward said handle axis (66) is at least 30 pounds-force (about 135 newtons).

9. The film rewind of claim 1, 2, 3, 4, 5, 6, 7, or 8 further characterized in that said body (12) has an attachment portion (16) and a cap (18), said attachment portion (16) defines a main axis (20), said cap (18) extends outward from said attachment portion (16), said cap (18) has said pair of opposed jaws (32), said jaws (32) each have an inner face (38), said inner faces (38) longitudinally bounding a channel (40) extending substantially perpendicular to said main axis (20), said endwall (42) at least partially occludes one end of said channel (40), said jaws (32) have a handle receiver (46) adjacent said endwall (42), said jaws (32) resiliently retain said handle (14) within said handle receiver (46), said handle (14) being pivotable within said handle receiver (46), relative to said body (12), between a stored position wherein said handle (14) extends along said channel (40) and a use position wherein said handle (14) abuts said endwall (42) and extends outward from said jaws (32).

10. A camera comprising: a film rewind (10) including a body (12) and a handle (14) and at least one structural member (24) connected to said film rewind, is characterized in that: said body (12), said handle (14), and said structural member (24) each comprising substantially the same thermoplastic polymer.
